# EUROPÄISCHE PATENTSCHRIFT

(11) **EP 1 479 930 B1**
(45) Veröffentlichungstag und Bekanntmachung des Hinweises auf die Patenterteilung: **07.11.2007**
(21) Anmeldenummer: 04003987.7
(22) Anmeldetag: 21.02.2004
(51) Int. Cl.: F16C 27/06

(54) **Lageraufnahme und Verfahren zum Herstellen einer Lageraufnahme**
Housing of an elastic mount and method of manufacturing the same
Logement d'un support élastique et son procédé de fabrication

(30) Priorität: 22.05.2003 DE 10323114
(43) Veröffentlichungstag der Anmeldung: 24.11.2004
(73) Patentinhaber: Dr.Ing. h.c. F. Porsche Aktiengesellschaft, 70435 Stuttgart (DE)
(72) Erfinder: Albers, Felix, 71292 Friolzheim (DE)

(56) Entgegenhaltungen:
- EP-A- 0 020 790
- DE-A1- 3 108 701
- DE-A1- 19 809 386
- DE-C1- 19 950 731
- FR-A- 2 573 363
- FR-A- 2 810 712
- US-A- 5 718 407
- US-A1- 2001 040 326
- US-A1- 2002 149 146

## Beschreibung

Die Erfindung bezieht sich auf Vorrichtung mit Lageraufnahme und Gummi-Metall-Lager und ein Verfahren zum Herstellen der Vorrichtung.

Aus dem nächstliegenden Stand der Technik, der DE 19 950 731 C1, ist ein Lager in einem Maschinenteil unter Zwischenschaltung eines am Lageraußenring gehaltenen Ringes sowie eines darauf angeordneten Elastomermaterials, das sich in Ausnehmungen des Ringes sowie des Maschinenteils hineinpresst, bekannt.

Aus der DE 31 08 701 A1 ist eine Vorrichtung zur elastischen Lagerung von Maschinenteilen bekannt, wobei ein inneres Befestigungsteil mit einem äußeren Gehäuse über einen dazwischen unter Vorspannung angeordneten Gummikörper kraftschlüssig verbunden ist.

Aufgabe der Erfindung ist es, eine einfach herzustellende Lageraufnahme für ein Gummi-Metall-Lager zu schaffen, welcher das Gummi-Metall-Lager dauerhaft fest aufnimmt und einer Loslösung in Folge von Werkstoff-Setzerscheinungen und hohen Temperaturen entgegenwirkt.

Diese Aufgabe wird erfindungsgemäß durch die Merkmale der Patentansprüche 1 und 6 gelöst. Weitere vorteilhafte Merkmale beinhalten die jeweiligen Unteransprüche.

Die mit der Erfindung hauptsächlich erzielten Vorteile bestehen darin, dass das Gummi-Metall-Lager in einem Lagersitz mit einem Festsitz gehalten wird, der im wesentlichen aus im Lagersitz vorgesehenen Öffnungen und einer mit diesen Öffnungen unter Formschluss gehaltenen Außenhülse des Lagers gebildet ist. Hierzu weist das Gummi-Metatt-Lager eine am Gummikörper festhaftende Außenhülse aus einem elastischen Material auf, die in dem mit scharfkantigen Aussparungen versehenen Lagersitz gehalten ist. Die Außenhülse verkrallt sich dabei in die den Aussparungen des Lagersitzes.

Hierdurch wird in vorteilhafter Weise eine innige Verbindung zwischen der ortsfesten Lagerhülse und der Außenhülse des Lagers erzielt, so dass zur Lageveränderung des Lagers im Lagersitz hohe Auspresskräfte erforderlich sind.

Damit ein Formschluss zwischen der Lagerhülse und der Außenhülse erzielt werden kann, ist die Außenhülse des Gummi-Metall-Lagers gegenüber dem Innendurchmesser des Lagersitzes mit Übermaß ausgeführt. Die große radiale Vorspannung der Außenhülse bewirkt partielle Wölbungen in den Aussparungen des Lagersitzes. Durch diese Maßnahme wird eine sogenannte Verkrallung erzielt, bei der sich Material des elastischen Werkstoffs der Außenhülse des Lagers teilweise in die Aussparungen der Lagerhülse hineindrückt, so dass ein optimales Festsetzen in Längs- und Querrichtung bewirkt wird.

Von besonderem Vorteil ist es, wenn der Lagersitz in einem Gussteil vorgesehen ist und die Aussparungen durch Öffnungen im Gussteil gebildet sind. Gussteile werden bereits in vielfältiger Weise für Lageraufnahmen verwendet; nur beispielhaft sei auf Getriebelagerungen verwiesen, die aus einem gegossenen Auge mit Flanschplatte bestehen und ein Gummi-Metall-Lager aufnehmen. In Gussteilen ist es in besonders einfacher Weise möglich, die zur Verkrallung des Lagers notwendigen Aussparungen durch Öffnungen zu erzeugen, die beim Bearbeiten des Lagersitzes ohne weitere Bearbeitungsschritte mit freigelegt werden. Die Öffnungen können beispielsweise durch Kerne gebildet werden, die so positioniert sind, dass sie beim Gießvorgang in der Nähe des Lagersitzes angeordnet sind. Die Kerne können in an sich bekannter Weise ausgebildet sein; nur beispielhaft seien hier Stifte im Gusswerkzeug erwähnt, die senkrecht zur Trennebene des Werkzeuges und senkrecht zur Achse des Lagersitzes angeordnet sind. Die Öffnungen können auch durch gezogene Kerne, verlorene Kerne, Einlegeteile oder Lunker gebildet werden. Beispielsweise können im Bereich des Lagersitzes während des Gießvorganges Kerne aus Keramikschaum mit eingegossen werden, die bei der Endbearbeitung des Lagersitzes dann freigelegt werden. Aufgrund ihrer geringen Festigkeit behindern die Einlegeteile die Verkrallung der Außenhülse des Lagers nicht.

Die Aussparungen sind dabei derart in der Lagerhülse angeordnet, dass zwischen der Lagerhülse und der Außenhülse ein Formschluss in Längs- und Querrichtung des Lagers erzielt werden kann.

Zur Erzielung einer optimalen Wirkung der Lageraufnahme ist eine Abstimmung des Werkstoffs für die elastische Außenhülse, das heißt, deren Elastizität und Duktilität maßgebend. Des weiteren ist die Wandstärke der Außenhülse sowie die maßliche Überdeckung zur Lageraufnahme (Presspassung) wichtig. Außerdem gewährleistet die Größe der Aussparungen in der metallischen Lagerhülse das Maß für die Einkrallung. Hierdurch wird erreicht, dass die elastische Außenhülse ausreichend tief in die Aussparungen kriechen kann, wobei die Außenhülse nicht in den Aussparungen auch unter Betriebs- und Temperaturbelastung ausknickt, wobei auch die Außenhülse nicht beim Einpressvorgang knickt oder bricht.

Ein Ausführungsbeispiel der Erfindung ist in den Zeichnungen dargestellt und wird im folgenden näher beschrieben.

Es zeigen
- Fig. 1: eine schaubildliche Explosionsdarstellung eines Getriebeträgers sowie eines einsetzbaren Gummi-Metall-Lagers,
- Fig. 2: einen horizontalen Schnitt durch den Getriebeträger,
- Fig. 3: einen Schnitt nach der Linie III-III der Fig. 2 durch den Getriebeträger mit eingesetztem Gummi-Metall-Lager, und
- Fig. 4: eine vergrößerte Darstellung des Details X der Fig. 3.

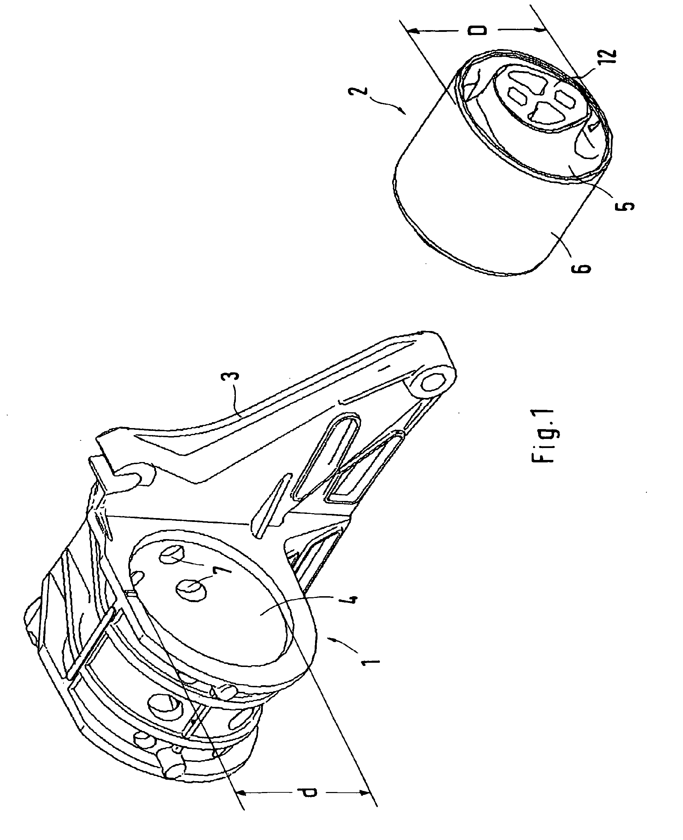

Die in Fig. 1 gezeigte Lageraufnahme 1 für ein Gummi-Metall-Lager 2, beispielsweise in einem Getriebeträger 3, umfasst im wesentlichen einen Lagersitz 4, in den das Lager 2 einsetzbar ist. Das Lager 2 weist an einem Gummikörper 5 eine elastische Außenhülse 6 auf. Der Lagersitz 4 ist im Träger 3 eingearbeitet und mit mehreren Aussparungen 7 versehen.

Der Träger 3 ist als Gussteil und die eingebrachten Aussparungen 7 sind scharfkantig ausgeführt. Die Außenhülse 6 des Lagers 2 besteht aus einem Kunststoff oder einem anderen gleichwirkenden Material und ist festhaftend mit dem Gummikörper 5 verbunden. Vorzugsweise ist die Außenhülse 6 auf dem Gummikörper 5 anvulkanisiert. Ein metallischer Kern 12 ist ebenfalls in den Gummikörper 5 einvulkanisiert.

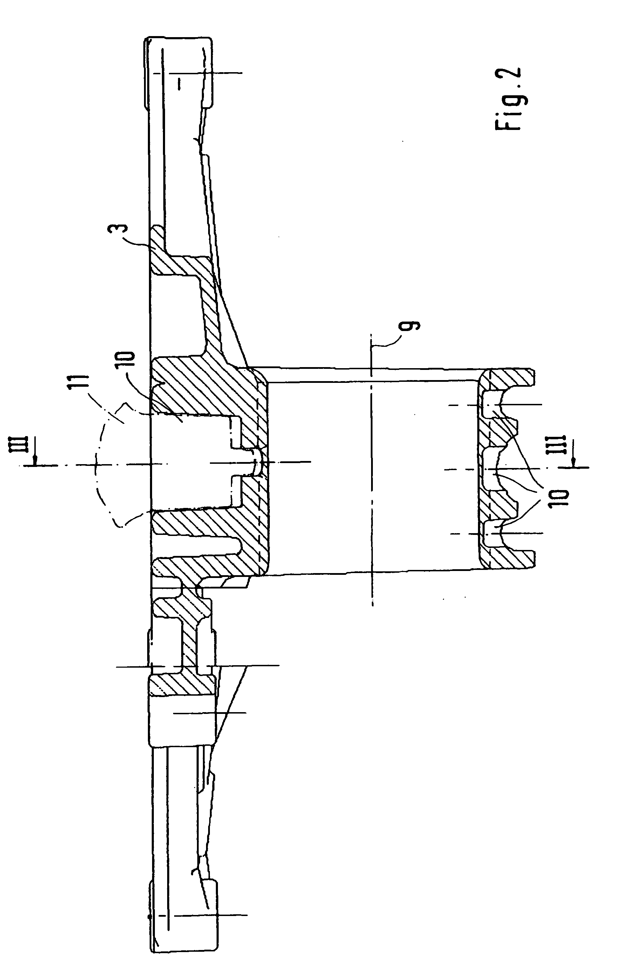

Fig. 2 zeigt den Getriebeträger 3 in einem Schnitt nach der Linie II-II nach dem Gießen und vor der Endbearbeitung des Lagersitzes 4. Die endgültige Form des Lagersitzes 4 ist durch eine gestrichelte Linie angedeutet. Senkrecht zur Achse 9 des Lagersitzes 4 sind im Gussteil Öffnungen 10 vorgesehen. Die Öffnungen 10 wurden beim Gussvorgang des Trägers 3 durch Stifte 11 (nur ein Stift 11 ist exemplarisch gestrichelt dargestellt) erzeugt, die im Gusswerkzeug angeordnet sind. Bei der Endbearbeitung des Lagersitzes 4 durch Bohren oder Ausdrehen werden die Öffnungen 10 freigelegt, so dass sich am Lagersitz 4 die scharfkantigen Aussparungen 7 bilden.

Die Außenhülse 6 weist eine maßliche Überdeckung gegenüber dem Lagersitz 4 auf, das heißt, der Außendurchmesser D der Außenhülse 6 ist größer als der Innendurchmesser d des Lagersitzes 4. Dieses Übermaß beträgt beispielsweise 2 mm.

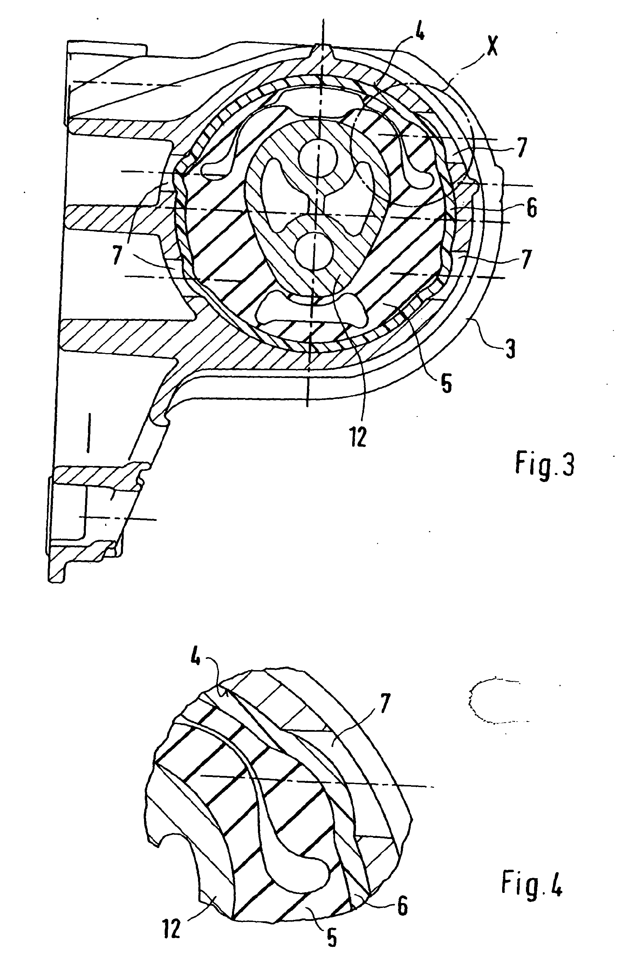

Durch das Übermaß der Außenhülse 6 mit dem Durchmesser D ist das Lager 2 im Lagersitz 4 eingepresst gehalten, so dass das gegenüber dem harten metallischen Lagersitz 4 weichere Material der Außenhülse 6 partiell in die Aussparungen 7 eindringt, wie insbesondere Fig. 4 näher zeigt. In dieser vergrößerten Darstellung ist auch zu erkennen, dass das Material der Außenhülse 6 sich in die Aussparungen 7 hineinwölbt und die Wölbungen 8 hierdurch bezogen auf alle Aussparungen 7 eine sogenannte Verkrallung im Lagersitz 4 und somit einen Formschluss bewirken. Durch die Verkrallung 8 wird das Lager 2 in Axial- und in Umfangsrichtung gegen maximale Auspresskräfte fest im Lagersitz 4 gehalten.

## Patentansprüche

1. Vorrichtung mit einem Lager und mit einer Lageraufnahme für das Lager, wobei ein Lagersitz Aussparungen aufweist, **dadurch gekennzeichnet, dass** das Lager ein Gummi-Metall-Lager (2) ist, welches eine an einem Gummikörper (5) festhaftende Außenhülse (6) aus einem elastischen Material aufweist, und dass die elastische Außenhülse (6) eingekrallt in den scharfkartigen Aussparungen (7) des Lagersitzes (4) gehalten wird.

2. Vorrichtung nach Anspruch 1, **dadurch gekennzeichnet, dass** der Lagersitz (4) in einem Gussteil (3) vorgesehen ist und die Aussparungen (7) durch Öffnungen (10) im Gussteil gebildet sind.

3. Vorrichtung nach Anspruch 2, **dadurch gekennzeichnet, dass** die Öffnungen (10) beim Giessen mit eingeformt worden sind.

4. Vorrichtung nach einem der vorangehenden Ansprüche, **dadurch gekennzeichnet, dass** die Außenhülse (6) des Gummikörpers (5) gegenüber dem Innendurchmesser des Lagersitzes (4) mit Übermaß versehen ist.

5. Vorrichtung nach Anspruch 4, **dadurch gekennzeichnet, dass** das Übermaß in etwa 2 mm beträgt.

6. Verfahren zum Herstellen einer Vorrichtung gemäß einem der vorangehenden Ansprüche mit einer Lageraufnahme, **dadurch gekennzeichnet, dass** die Lageraufnahme in einem Gussteil (3) vorgesehen ist, wobei beim Gießen des Gussteiles benachbart eines Lagersitzes (4) Öffnungen (10) vorgesehen und die Öffnungen bei der Endbearbeitung des Lagersitzes freigelegt werden und die Aussparungen (7) bilden.

7. Verfahren nach Anspruch 6, **dadurch gekennzeichnet, dass** die Öffnungen (10) durch Kerne (11) gebildet werden.

8. Verfahren nach Anspruch 6, **dadurch gekennzeichnet, dass** die Öffnungen durch Einlegeteile gebildet werden.

## Claims

1. A device with a bearing and with a bearing mount for the bearing, wherein a bearing seat has recesses, **characterised in that** the bearing is a rubber-metal bearing (2) having an outer sleeve (6) which is made of a resilient material and which adheres to a rubber body (5), and **in that** the resilient outer sleeve (6) is held clamped in the sharp-edged recesses (7) in the bearing seat (4).

2. A device according to claim 1, **characterised in that** the bearing seat (4) is provided in a cast part (3), and the recesses (7) are formed by openings (10) in the cast part.

3. A device according to claim 2, **characterised in that** the openings (10) are jointly formed during the casting process.

4. A device according to any one of the preceding claims, **characterised in that** the outer sleeve (6) of the rubber body (5) is oversized in relation to the inner diameter of the bearing seat (4).

5. A device according to claim 4, **characterised in that** the amount of the oversize is approximately 2 mm.

6. A method of manufacturing a device, according to any one of the preceding claims, with a bearing mount, **characterised in that** the bearing mount is provided in a cast part (3), wherein openings (10) are provided adjacent to a bearing seat (4) during casting of the cast part, and the openings are exposed during finishing of the bearing seat and form the recesses (7).

7. A method according to claim 6, **characterised in that** the openings (10) are formed by cores (11).

8. A method according to claim 6, **characterised in that** the openings are formed by inserts.

## Revendications

1. Dispositif comportant un palier et un logement pour le palier, un siège de palier comportant des évidements, **caractérisé en ce que** le palier est un palier en caoutchouc et métal (2) qui comporte un manchon extérieur (6), réalisé dans un matériau élastique et attaché de manière fixe à un corps en caoutchouc (5), et **en ce que** le manchon extérieur (6) élastique est maintenu en s'agrippant dans les évidements (7) à arêtes vives du siège de palier (4).

2. Dispositif selon la revendication 1, **caractérisé en ce que** le siège de palier (4) est prévu dans une pièce moulée (3) et les évidements (7) sont formés par les orifices (10) dans la pièce moulée.

3. Dispositif selon la revendication 2, **caractérisé en ce que** les orifices (10) ont été formés conjointement pendant le moulage.

4. Dispositif selon l'une quelconque des revendications précédentes, **caractérisé en ce que** le manchon extérieur (6) du corps en caoutchouc (5) est surdimensionné par rapport au diamètre intérieur du siège de palier (4).

5. Dispositif selon la revendication 4, **caractérisé en ce que** le surdimensionnement est de l'ordre de 2 mm environ.

6. Procédé de réalisation d'un dispositif selon l'une quelconque des revendications précédentes avec un logement de palier, **caractérisé en ce que** le logement de palier est prévu dans une pièce moulée (3), des orifices (10) étant prévus à proximité d'un siège de palier (4) pendant le moulage de la pièce moulée et les orifices étant dégagés lors de l'usinage final du siège de palier et forment les évidements (7).

7. Procédé selon la revendication 6, **caractérisé en ce que** les orifices (10) sont formés par des noyaux (11).

8. Procédé selon la revendication 6, **caractérisé en ce que** les orifices sont formés par des inserts.
